# EUROPÄISCHE PATENTSCHRIFT

(11) **EP 0 617 833 B1**
(45) Veröffentlichungstag und Bekanntmachung des Hinweises auf die Patenterteilung: **06.03.1996**
(21) Anmeldenummer: 93901601.0
(22) Anmeldetag: 21.12.1992
(51) Int. Cl.: H01H 1/02

(54) **VERFAHREN ZUM VORBELOTEN EINER KONTAKTAUFLAGE FÜR EIN ELEKTRISCHES SCHALTGERÄT UND HALBZEUG ZUR VERWENDUNG ALS KONTAKTAUFLAGE**
PROCESS FOR PRE-SOLDERING A CONTACT BASE FOR AN ELECTRIC CIRCUIT COMPONENT AND SEMI-FINISHED PRODUCT FOR USE AS A CONTACT BASE
PROCEDE POUR LE DEPOT PREALABLE DE BRASURE SUR UN SUPPORT DE CONTACT POUR UN APPAREIL ELECTRIQUE DE COMMUTATION ET DEMI-PRODUIT A EMPLOYER COMME SUPPORT DE CONTACT

(30) Priorität: 20.12.1991 DE 4142374
(43) Veröffentlichungstag der Anmeldung: 05.10.1994
(60) Teilanmeldung: 95107352.7
(73) Patentinhaber: SIEMENS AKTIENGESELLSCHAFT, D-80333 München (DE)
(72) Erfinder: HAUNER, Franz, D-8551 Röttenbach (DE); SCHNEIDER, Manfred, D-8620 Lichtenfels (DE)
(86) Internationale Anmeldenummer: DE9201073
(87) Internationale Veröffentlichungsnummer: WO9313535

(56) Entgegenhaltungen:
- GB-A- 1 162 887
- US-A- 2 216 510

## Beschreibung

Die Erfindung bezieht sich auf ein Verfahren zum Vorbeloten einer Kontaktauflage mit Hartlot auf CuAg-Basis, über welches die Kontaktauflage mit einem Kontaktträger verbindbar ist, wofür das Hartlot als ebene Schicht aufgebracht werden muß, vorzugsweise mit definierter Kontur, beispielsweise unter Verwendung einer Lotfolie od. dgl., wobei die aufgebrachte Lotschicht aufgeschmolzen wird. Unter einer Kontaktauflage werden ein einzelnes Kontaktstück, aber auch Kontaktbänder oder -profile zum Ablängen von einzelnen Kontaktstücken verstanden.

Durch Formteiltechnik hergestellte Kontaktstücke werden auf den Kontaktträgern von Schaltgeräten üblicherweise durch Hartlöten befestigt. Dazu wird auf die Rückseite der Kontaktstücke oder des als Band vorliegenden Kontaktmaterials das Lot als ebene Schicht aufgebracht', beispielsweise unter Verwendung einer Lotfolie. Liegt die Kontaktauflage zunächst als Kontaktband bzw. -profil vor, von dem später Kontaktstücke abgelängt werden, ist eine Lotschicht zunächst auch durch Walzplattieren erzeugbar. Insbesondere Lotfolien lassen sich in einfacher Weise durch Ultraschall zu einem Lotplättchen ablängen und gleichermaßen auf der Lotseite von Kontaktstücken anheften, wie es in der älteren, aber nachveröffentlichten DE-A-40 24 941 beschrieben ist. Derartig vorbelotete Kontaktauflagen können weitgehend automatisiert weiterverarbeitet und im Rahmen eines integrierten Fertigungsvorganges, z.B. durch induktive Erwärmung und Löten, auf dem Kontaktträger befestigt werden.

Bei letzterem energieinduzierten Prozeß können Probleme dadurch auftreten, daß von der Lotseite Lot über die Schmalseiten des Kontaktstückes hochsteigt und auf die Schaltfläche gelangt. Durch solche unkontrollierbaren Vorgänge kann bei der bestimmungsgemäßen Verwendung des Schaltgerätes das Schaltverhalten der Kontaktauflagen in unerwünschtem Maße beeinflußt werden.

Es wird daher verlangt, daß beim Vorbeloten von Kontaktauflagen das Lot als glatte Schicht aufgebracht wird, wobei die Fläche der Lotschicht im allgemeinen kleiner als die Fläche an der Lotseite der Kontaktauflage ist. Dadurch soll die Benetzung der Kontaktschmalseiten mit Lot verhindert werden.

Speziell für Schaltgeräte der Energietechnik werden üblicherweise Kontaktauflagen mit einer Kontaktmaterialschicht der Konstitution Silbermetall (AgMe) bzw. Silbermetallverbindung (AgMeV), insbesondere auch Silbermetalloxid (AgMeO), verwendet. Häufig bilden derartige Kontaktauflagen einen Zweischichtaufbau, d.h. sie bestehen aus der eigentlichen Kontaktschicht und einer Schicht aus Reinsilber auf der Lotseite. Ein dafür geeignetes Lot ist auf der Basis von Kupfer und Silber, das weiterhin insbesondere Phosphor enthalten kann, bekannt.

Wenn gemäß dem Stand der Technik Lotfolien auf die Lotseiten von Kontaktauflagen aufgebracht werden, kann beim Aufschmelzen des Lotes beobachtet werden, daß das Lot bevorzugt an den Rändern der Lotschicht zuerst schmilzt und sich Luft- oder Gaseinschlüsse zwischen Lotfolie und Konaktstück meist zu einer zentralen Blase auf der Lotseite des Kontaktstückes ausbilden. Zum Beseitigen derartiger für die Weiterverarbeitung der vorbeloteten Kontaktstücke störender Blasen und damit verbundener Unebenheiten auf der Oberfläche der Lotschicht muß das Lot so lange weiter erhitzt werden, bis die Blase durch Druckerhöhung platzt und sich auflöst. Bei derartig hohen Temperaturen läuft im allgemeinen das Lot bis auf die Kontaktseite des Kontaktstückes.

In der GB-A-11 62 887 wird ein Verfahren zum kontinuierlichen Befestigen eines schmalen Lotstreifens auf einem Metallband, beispielsweise einer Kontaktauflage, beschrieben, bei dem der Lotstreifen zur Bildung einer stoffschlüssigen Verbindung mit dem Metallband kurzzeitig aufgeschmolzen wird und ein Schmelzgefüge hat. Die Formkontur des Lotstreifens wird dabei im allgemeinen verloren gehen, wobei zumindest eine konvexe Oberfläche entsteht. Aus der US-A-22 16 510 ist ein Verfahren zur Herstellung von Kontakten bekannt, bei dem aus beloteten Platten Formteile ausgestanzt und weiterverarbeitet werden. Die nach unterschiedlichen Verfahren vorbeloteten Platten werden dabei zur Gewährleistung einer ebenen Oberfläche gewalzt.

Ausgehend von obigem Sachverhalt und letzterem Stand der Technik ist es Aufgabe der Erfindung, ein Verfahren zum Vorbeloten von Kontaktauflagen anzugeben, mit dem auf letztere eine ebene Lotschicht mit definierter Dicke und scharfer Randkontur aufgebracht werden kann. Bei diesen Verfahren soll insbesondere eine Benetzung der Kontaktseitenflächen mit Lot vermieden werden und ein Halbzeug zur Verwendung als Kontakte bei Schaltgeräten geschaffen werden.

Die Aufgabe ist erfindungsgemäß dadurch gelöst, daß beim Aufschmelzen die freie Oberfläche der Lotschicht mit einem Material abgedeckt ist, das mit Silber und Kupfer keine Löslichkeit besitzt. Dieses Verfahren kann vorteilhaft sowohl für einzelne Kontaktstücke, aber auch für Kontaktbänder bzw. Folien angewendet werden.

Im Rahmen der Erfindung ist ein Halbzeug zur Verwendung als Kontaktauflage erhältlich, bei dem die Lotschicht über ihre gesamte Fläche in stoffschlüssiger Verbindung mit der Lotseite der Kontaktauflage steht und bei dem die Lotschicht ein Schmelzgefüge hat. Vorteilhafterweise liegt die Lotschicht weitgehend blasenfrei auf der Lotseite der Kontaktauflage auf und hat zumindest keine Blase, deren Durchmesser größer als die Dicke der Lotschicht ist. Bei einem Zweischichtkontaktstück mit einer Silber-Metalloxidschicht auf der Kontaktseite und einer Reinsilberschicht auf der Lotseite und einem Kupfer-Silber-Hartlot mit einem Gehalt an Phosphor besteht das Schmelzgefüge aus einem ternären Eutektikum und kupfer- oder silberreichen Mischkristallen. Dabei sind die Gebrauchseigenschaften der Lotschicht insbesondere nicht durch angelöstes Silber beeinträchtigt.

Beim erfindungsgemäßen Verfahren kann das Material zum Abdecken der freien Oberfläche der Lotschicht in einer ersten Alternative eine Abdeckung unter der auf ihrer Lotseite mit der Lotschicht versehenen Kontaktauflage bilden. In einer zweiten Alternative des erfindungsgemäßen Verfahrens kann das Material zum Abdecken der freien Oberfläche der Lotschicht eine Abdeckung über der auf ihrer Lotseite mit der Lotschicht versehenen Kontaktauflage bilden. In diesem Fall wird für den Aufschmelzvorgang der Kontakt umgekehrt angeordnet. In beiden Fällen kann die Abdeckung auch durch eine um ihre Achse rotierende Walze gebildet werden, in der ein Kontaktband bzw. -profil einschließlich Lotband durchlaufend geführt ist.

Als Material zur Bildung der Abdeckung kann entweder ein hochschmelzendes Metall, z.B. Tantal (Ta), Molybdän (Mo) oder Wolfram (W), oder aber Keramik verwendet werden. Wesentlich ist dabei neben den thermodynamischen Eigenschaften des Materials, wie die Unlöslichkeit mit Kupfer und Silber, weiterhin die Forderung, keine oder nur eine sehr geringe Benetzbarkeit des Abdeckmaterials mit flüssigem Lot zuzulassen. Damit wird in überraschender Weise erreicht, daß ein Kriechen von flüssigem Lot zu unerwünschten Stellen der Kontaktstücke verhindert wird. Insbesondere wird damit erreicht, daß zumindest die der Lotschicht gegenüberliegende Seite der Kontaktauflage frei von Lot ist. Auch eine Benetzung der Kontaktschmalseiten mit flüssigem Lot kann damit weitestgehend ausgeschlossen werden.

Die Erfindung hat sich insbesondere beim Beloten von Zweischicht-Kontaktstücken bewährt, die aus einer Silber-Metalloxid-Schicht auf der Kontaktseite und aus einer Reinsilberschicht auf der Lotseite bestehen und die mit einem phosphorhaltigen Lot, z.B. L-Agl5P, belotet werden. Dabei hat es sich als besonders geeignet erwiesen, das Aufschmelzen durch induktive Erwärmung vorzunehmen, womit eine lokal gezielte Erwärmung erreicht wird und wobei die Temperaturzeitkurve zur Prozeßkontrolle dienen kann. Es ist aber auch eine Ofenerwärmung möglich, wenn die Haltezeit entsprechend kurz gewählt wird. Weiterhin bieten sich für eine schnelle und lokale Erwärmung ein Laser oder auch eine Hochleistungslampe an. In allen Fällen erfolgt das Aufschmelzen der Lotschicht zweckmäßigerweise unter Schutzgas, vorzugsweise unter Edelgas oder Stickstoff.

Weitere Einzelheiten und Vorteile der Erfindung ergeben sich aus der nachfolgenden Figurenbeschreibung von Ausführungsbeispielen anhand der Zeichnung in Verbindung mit den Patentansprüchen. Es zeigen
- Figur 1: ein erstes Beispiel zur Verdeutlichung der erfindungsgemäßen Vorgehensweise mit einer Abdeckung unter einem beloteten Kontaktstück,
- Figur 2: das gemäß Figur 1 belotete Kontaktstück in Unteransicht,
- Figur 3: ein Temperatur-Zeit-Diagramm bei einer Anordnung gemäß Figur 1,
- Figur 4: ein Beispiel für eine zu Figur 1 alternative Vorgehensweise mit einer Abdeckung auf dem beloteten Kontaktstück,
- Figur 5: ein zu Figur 1 entsprechendes Beispiel zur Herstellung von Kontaktbändern bzw. -profilen und
- Figur 6: das Mikrogefüge einer Lotschicht bei einem Halbzeug für Kontaktauflagen.

Die Figuren werden teilweise gemeinsam beschrieben:

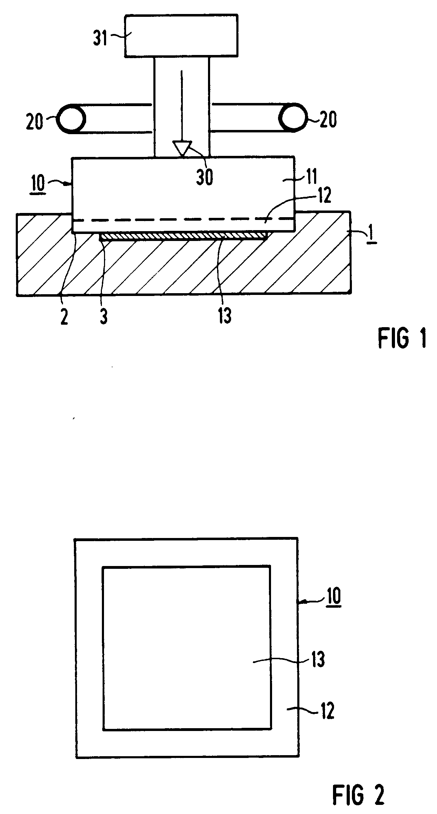

In Figur 1 kennzeichnet 1 einen Formkörper aus Tantal, der eine Unterlage für ein mit einer ebenen Schicht 13 zu belotendes Kontaktstück 10 bildet. Dabei ist die Unterlage 1 an ihrer Oberseite mit Aussparungen 2 und 3 profiliert, wobei die Aussparung 2 an Größe und Form des Kontaktstückes 10 und die Aussparung 3 an Größe und Form der Lotschicht 13 angepaßt ist.

Das Kontaktstück 10 ist als Zweischichtkontaktstück ausgebildet und hat als Kontaktauflage eine Schicht 11 aus Silbermetalloxid, beispielsweise AgSnO₂Bi₂O₃CuO. Da dieses Material nicht lötfähig ist, wird bereits bei der im allgemeinen sintertechnischen Herstellung des Kontaktstückes 10 dessen Unterseite mit einer Reinsilberschicht 12 versehen, welche gut lötbar ist. Auf die Reinsilberschicht 12 wird die Lotschicht 13 aufgebracht, mittels der später das Kontaktstück 10 zur bestimmungsgemäßen Verwendung an einen (nichtdargestellten) Kontaktträger eines Schaltgerätes befestigt werden kann. Insbesondere wird zur Bildung der Lotschicht 13 eine Folie aus einem geeigneten Hartlot auf CuAg-Basis, insbesondere L-Agl5P (sog. Silfos-Lot), verwendet, das einen Schmelzbereich zwischen 650 und 800°C und eine Arbeitstemperatur von ca. 710°C hat.

Eine derartige Lotfolie 13 kann in geeigneter Größe von einem durchgehenden Band abgelängt werden und wird in die Aussparung 3 der Unterlage 1 eingefügt. Darauf wird das Kontaktstück 10 mit seiner Reinsilberschicht 12 eingesetzt, so daß die Unterseite dicht auf der Lotfolie 13 aufliegt. Um dies zu gewährleisten, kommt es auf exakte Maßhaltigkeit bzw. Anpassung der entsprechenden Aussparungen 2 und 3 in der Unterlage l an.

Aus Figur 2 ist die Geometrie des fertig beloteten Kontaktstückes 10 in Rechteckform ersichtlich: Die Reinsilberschicht 12 hat eine größere Fläche als die darauf aufgebrachte Lotschicht 13 mit einem von Lot freien Randbereich. Wesentlich ist dabei insbesondere, daß die Lotschicht 13 mit ihrer Oberfläche eben ist, daß keine zentrale Blase zwischen Lotschicht 13 und Silberschicht 12 entsteht und daß die fertige Lotschicht 13 durchgehend eben mit konstanter Dicke und scharfen Konturen von definierter Geometrie ausgebildet ist. Insbesondere letztere Nebenbedingungen können im Normalfall beim Aufschmelzen einer Lotfolie 13 verlorengehen. Es kann sich dann flüssiges Lot über die Silberschicht 12 undefiniert über die Kanten hinweg ausbreiten und auch zu einer Benetzung der Seitenflächen des Kontaktstückes 10 mit Lot kommen.

Die Unterlage 1 gemäß Figur 1 mit den Aussparungen 2 und 3 vermeidet letzteren unerwünschten Effekt. Dabei ist wichtig, daß das Tantal selbst für flüssiges Lot so gut wie keine Benetzbarkeit aufweist. Weiterhin hat Tantal keine Löslichkeit für Silber und Kupfer. Ein sich theoretisch bildendes Tantalphosphit hat einen hohen Schmelzpunkt, so daß es unschädlich ist.

In Figur 1 sind zum Aufschmelzen der Lotschicht 13 oberhalb des Kontaktstückes 10 Windungen eines Induktors 20 angeordnet. Damit läßt sich eine schnelle und gezielte Erwärmung der Anordnung mit dem Kontaktstück 10 und der Lotfolie 13 erreichen. Zur Prozeßkontrolle wird ein Temperatursensor 30 auf die Oberfläche des Kontaktstückes 10 gerichtet. Der Temperatursensor 30 arbeitet beispielsweise nach dem Infrarotstrahlungsprinzip. Weiterhin ist noch ein Gewicht 31 oberhalb des Induktors 20 vorhanden, mit dem die Anordnung aus Kontaktstück 10 und Lotschicht 13 über ein nicht näher bezeichnetes Zwischenstück belastet wird, um einen guten Wärmeübergang zwischen Kontaktstück 10, Lotfolie 13 und Tantal-Unterlage 1 zu erzielen.

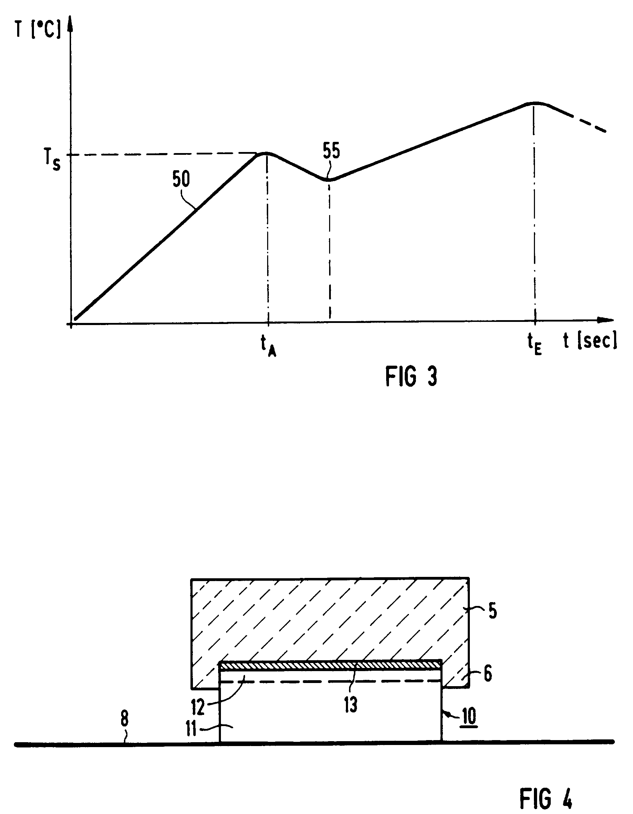

Aus Figur 3 ist die Temperaturführung im einzelnen erkennbar. Durch die mittels des an eine Wechselstromquelle angeschlossenen Induktors 20 im metallischen Werkstoff hervorgerufenen Wirbelströme erfolgt zunächst eine Erwärmung des Kontaktstückes 11 mit in etwa gleichmäßigem Temperaturanstieg. Wird bei t_{A} die untere Temperatur des Schmelzbereiches des verwendeten Lotes - und zwar ca. T_{S} = 650°C beim Silfos-Lot - erreicht, tritt in der Zeit-Temperatur-Kurve 50 eine Senke 55 auf, da Schmelzwärme benötigt wird und ein Wärmeausgleich zwischen dem wärmeren Kontaktstück 10 und der kälteren Tantalunterlage 1 erfolgt. Anschließend erwärmt sich die Anordnung: Kontaktstück 10-Lotschicht 13-Tantalunterlage 1 mit langsamerer Aufheizgeschwindigkeit. Bei der Zeit t_{E}, bei der die obere Temperatur des Schmelzbereiches, d.h. die Liquiduslinie im Zustandsdiagramm, im allgemeinen noch nicht erreicht ist, sondern man sich vielmehr bei der Arbeitstemperatur des verwendeten Lotes befindet, wird abgeschaltet, so daß die gesamte Anordnung abkühlt.

Durch die Temperaturkurve T = f(t) läßt sich der Prozeßverlauf mit Aufschmelzen und Anschmelzen der Lotschicht 13 regeln. Insbesondere durch die induktive Erwärmung ist dabei vorteilhafterweise der rasche Temperaturanstieg zunächst im Kontaktstück erreicht. Das Aufschmelzen des Lotes und Anschmelzen der Lotschicht 13 erfolgt dann in kürzester Zeit. Da weiterhin durch die Profilierungen 2 und 3 in der Tantalunterlage 1 Barrieren gebildet werden, kann praktisch kein Lot auf die Seitenflächen des Kontaktstückes 10 gelangen.

In Figur 4 ist das Kontaktstück 10 gemäß Figur 1 in umgekehrter Orientierung dargestellt. Dies bedeutet, daß sich an der Unterseite die Kontaktauflage 11 und an der Oberseite die Reinsilberschicht 12 befindet. Auf die Silberschicht 1 ist eine Hartlotfolie zur Bildung der Lotschicht 13 gelegt und darüber eine Abdeckung 5 mit Randprofil 6 aufgebracht. Die gesamte Anordnung befindet sich auf einem Band 8, das als Durchlaufband durch einen Wärmeofen geführt werden kann.

Bei der Anordnung gemäß Figur 4 bildet die Abdeckung 5 der Lotschicht 13 eine Auflage für das Kontaktstück 10 und besteht in diesem Fall beispielsweise aus Keramik, die von dem Lot nicht benetzt wird und keine Löslichkeit für Kupfer und Silber besitzt. Vorteilhaft bei dieser Anordnung ist, daß Gase durch das flüssige Lot nach oben entweichen können.

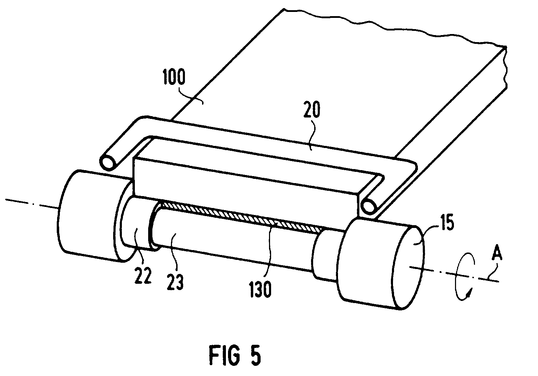

In Figur 5 ist eine um ihre Mittelachse A drehbare Walze 15 vorhanden, die dort als Unterlage für ein Kontaktband 100 dient. Das Kontaktband 100 wird beispielsweise durch Strangpressen eines Pulverrohlings hergestellt und durch Walzplattieren mit einem Lotband 130 verbunden. Das Kontaktband 100 einschließlich Lotband 130 kann auch profilartig ausgebildet sein. Von derartigen Bändern oder Profilen lassen sich später zur bestimmungsgemäßen Verwendung Kontaktstücke ablängen. Die Walze 15 hat in ihrer Oberfläche Aussparungen 22 und 23 zur Aufnahme von Kontaktband 100 und Lotband 130, wozu ein Induktor 20 gemäß Figur 1 vorhanden ist. Bei Rotation der aus hochschmelzendem Metall oder Keramik bestehenden Walze 15 wird der im Wirkungsbereich des Induktors 20 liegende Lotabschnitt als ebene Schicht aufgeschmolzen, wobei seitlich wiederum die exakt definierte Kontur eingehalten wird.

In Figur 5 ist die Walze 15 als Unterlage für das durchlaufende Kontaktband 100 mit Lotschicht 130 dargestellt. Bei umgekehrter Anordnung kann das Kontaktband 100 mit Lotschicht 130 auch unterhalb der Walze 15 durchlaufen. In beiden Fällen ist die Funktion einer Abdeckung gewährleistet.

Der Vorbelotungsprozeß mit dem Aufschmelzen des Lotes findet in allen Beispielen unter Schutzgas, vorzugsweise Edelgas wie insbesondere Argon und Helium oder unter Stickstoff, statt. Im Ergebnis entsteht dabei ein Halbzeug, bei dem die Lotschicht ein Schmelzgefüge hat. Da die Kontaktauflage vorzugsweise pulvermetallurgisch hergestellt wird, haben die Kontaktschicht - und bei einem Zwei-Schichten-Aufbau auch dessen lotfähige Silberschicht - ein Sintergefüge und die Lotschicht ein Schmelzgefüge. Eine lichtmikroskopische Darstellung zeigt dabei einen scharfen Phasenübergang zwischen den Schichten, wobei aber ein fester Materialverbund besteht. Ein störendes Anlösen des im Kontakt vorhandenen Silbers tritt praktisch nicht auf. Insbesondere die Lotoberfläche ist dann frei von Fehlern.

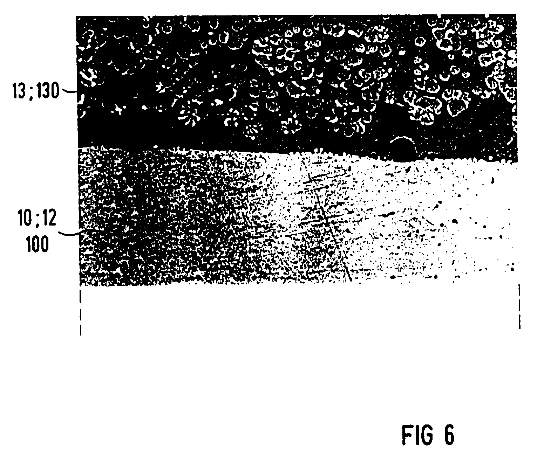

Aus Figur 6 wird deutlich, daß die aufgeschmolzene Lotschicht in stoffschlüssiger Verbindung mit der Lotseite der Kontaktauflage steht und ein Schmelzgefüge hat. Durch die nur kurzeitige Erwärmung ist Silber auf der Lotseite des Kontaktstückes nur geringfügig angelöst. Allenfalls im Übergangsbereich bis zu einer Dicke von maximal einem Drittel der Lotschicht können sich Silberdendriten ausbilden. Vereinzelt noch vorhandene Gaseinschlüsse sind so klein, daß sie die Oberfläche der Lotschicht nicht beeinflussen und daher nicht stören.

Die Lotschicht 13 bzw. 130 ist gemäß Figur 6 weitgehend frei von Silberdendriten. Das Gefüge der Lotschicht besteht entsprechend dem Zustandsdiagramm Cu-Ag-P im wesentlichen aus einem ternären Eutektikum und weiterhin aus kupfer- oder silberreichen Mischkristallen. Durch das gezielte Aufschmelzen der Lotschicht unterhalb der Liquiduslinie im Zustandsdiagramm sind die Gebrauchseigenschaften des Lotes ohne Änderung der Arbeitstemperatur erhalten.

In gleicher Weise wie bei den beschriebenen Verfahren können auch Kontaktauflagen auf der Basis von Silber-Metall, beispielsweise Silber-Nickel, oder auf der Basis anderer Silber-Metallverbindungen mit dafür geeignetem Lot beschichtet werden. Statt einer Lotfolie können gegebenenfalls auch Lotpasten zur Bildung der Lotschicht verwendet werden. Als Material für die Abdeckung unter oder über der Kontaktauflage können neben Tantal oder Keramik auch Wolfram oder Molybdän oder andere geeignete Metalle verwendet werden.

## Patentansprüche

1. Verfahren zum Vorbeloten einer Kontaktauflage mit Hartlot auf CuAg-Basis, über welches die Kontaktauflage mit einem Kontaktträger verbindbar ist, wofür das Hartlot als ebene Lotschicht aufgebracht werden muß, vorzugsweise mit definierter Kontur, beispielsweise unter Verwendung einer Lotfolie od. dgl., wobei die aufgebrachte Lotschicht aufgeschmolzen wird, **dadurch gekennzeichnet,** daß beim Aufschmelzen die freie Oberfläche der Lotschicht (13, 130) mit einem Material (1, 5, 15) abgedeckt ist, das mit Silber (Ag) und Kupfer (Cu) keine Löslichkeit besitzt.

2. Verfahren nach Anspruch 1, **dadurch gekennzeichnet,** daß beim Aufschmelzen der Lotschicht (13, 130) das Material eine Abdeckung (1, 15) bildet, die sich unter der auf ihrer Lotseite mit der Lotschicht (13, 130) versehenen Kontaktauflage (10, 100) befindet.

3. Verfahren nach Anspruch 2, **dadurch gekennzeichnet,** daß beim Aufschmelzen die Abdeckung (1, 15) eine Aufnahme für die Lotschicht (13, 130) einerseits und die Lotseite der Kontaktauflage (10, 100) andererseits bildet.

4. Verfahren nach Anspruch 1, **dadurch gekennzeichnet,** daß beim Aufschmelzen des Lotes das Material eine Abdeckung (5) bildet, die sich über der auf ihrer Lotseite mit der Lotschicht (13) versehenen Kontaktauflage (10) befindet.

5. Verfahren nach einem der vorhergehenden Ansprüche **dadurch gekennzeichnet,** daß das Material (1, 5, 15) zum Abdecken der Lotschicht ein hochschmelzendes Metall, beispielsweise Tantal (Ta), Molybdän (Mo), Wolfram (W) oder Mischungen davon, ist und daß ein Formkörper (1, 5) aus dem hochschmelzenden Metall, vorzugsweise aus Tantal (Ta), verwendet wird.

6. Verfahren nach einem der Ansprüche 1 bis 4, **dadurch gekennzeichnet,** daß das Material zum Abdecken der Lotschicht Keramik ist und daß ein Formkörper (15), vorzugsweise eine Walze, aus der Keramik verwendet wird.

7. Verfahren nach einem der vorhergehenden Ansprüche, **dadurch gekennzeichnet,** daß das Aufschmelzen der Lotschicht (13, 130) durch induktive Erwärmung erfolgt.

8. Verfahren nach Anspruch 7, **dadurch gekennzeichnet,** daß die Temperatur-Zeit-Kurve (T = f(t)) zum Regeln des Prozeßverlaufes beim Aufschmelzen der Lotschicht (13, 130) verwendet wird.

9. Verfahren nach einem der Ansprüche 1 bis 6, **dadurch gekennzeichnet,** daß das Aufschmelzen der Lotschicht (13, 130) durch Ofenerwärmung erfolgt.

10. Verfahren nach einem der vorhergehenden Ansprüche, **dadurch gekennzeichnet,** daß das Aufschmelzen der Lotschicht (13, 130) unter Schutzgas, vorzugsweise unter Edelgas oder Stickstoff, erfolgt.

## Claims

1. A method of presoldering a contact facing using a CuAg-base hard solder, by which the contact facing can be joined to a contact carrier, for which purpose the hard solder must be deposited as an even layer, preferably with a defined contour, for example by the use of a solder foil or the like, the deposited solder layer being melted-on,
characterised in that
in the melting-on the solder layer (13, 130) is covered by a material (1, 5, 15) which has no solubility with respect to silver (Ag) and copper (Cu).

2. A method according to claim 1, characterised in that in the melting-on of the solder layer (13, 130) the material is in the form of a cover (1, 15) which is situated under the contact facing (10, 100) that is provided with the solder layer (13, 130) on its solder side.

3. A method according to claim 2, characterised in that in the melting-on the cover (1, 15) receives the solder layer (13, 130) on the one hand and the solder side of the contact facing (10, 100) on the other hand.

4. A method according to claim 1, characterised in that in the melting-on of the solder the material is in the form of a cover (5) which is situated above the contact facing (10) that is provided with the solder layer (13) on its solder side.

5. A method according to one of the preceding claims, characterised in that the material (1, 5, 15) for covering the solder layer is a refractory metal, for example tantalum (Ta), molybdenum (Mo), tungsten (W) or mixtures thereof, and that a shaped body (1, 5) of the refractory metal, preferably of tantalum (Ta), is used.

6. A method according to one of claims 1 to 4, characterised in that the material for covering the solder layer is ceramic and that a shaped body (15), preferably a roll, of the ceramic is used.

7. A method according to one of the preceding claims, characterised in that the melting-on of the solder layer (13, 130) is performed by induction heating.

8. A method according to claim 7, characterised in that the temperature-time curve (T = f(t)) is used to control the course of the process in the melting-on of the solder layer (13, 130).

9. A method according to one of claims 1 to 6, characterised in that the melting-on of the solder layer (13, 130) is performed by furnace heating.

10. A method according to one of the preceding claims, characterised in that the melting-on of the solder layer (13, 130) is performed under protective gas, preferably under inert gas or nitrogen.

## Revendications

1. Procédé de dépôt préalable sur un appui de contact d'une brasure dure à base de CuAg, par laquelle l'appui de contact peut être relié à un support de contact, la brasure dure devant être déposée à cet effet sous la forme d'une couche de brasure plane, de préférence à contour défini, par exemple en utilisant une feuille à braser ou analogue, la couche de brasure déposée étant fondue, caractérisé en ce que lors de la fusion, la surface libre de la couche de brasure (13, 130) est recouverte d'un matériau (1, 5, 15) qui n'est pas soluble avec l'argent (Ag) et le cuivre (Cu).

2. Procédé suivant la revendication 1, caractérisé en ce que lors de la fusion de la couche de brasure (13, 130), le matériau forme un recouvrement (1, 15) qui se trouve sous l'appui de contact (10, 100) muni de la couche de brasure (13, 130) sur sa face à braser.

3. Procédé suivant la revendication 2, caractérisé en ce que lors de la fusion, le recouvrement (1, 15) forme un logement pour la couche de brasure (13, 130) d'une part et pour la face à braser de l'appui de contact (10, 100) d'autre part.

4. Procédé suivant la revendication 1, caractérisé en ce que lors de la fusion de la brasure, le matériau forme un recouvrement (5) qui se trouve au-dessus de l'appui de contact (10) muni de la couche de brasure (13) sur sa face à braser.

5. Procédé suivant l'une des revendications précédentes, caractérisé en ce que le matériau (1, 5,15) de recouvrement de la couche de brasure est un métal à haut point de fusion, par exemple du tantale (Ta), du molybdène (Mo), du tungstène (W) ou leurs mélanges et que l'on utilise un corps moulé (1, 5) en le métal à haut point de fusion, de préférence en tantale (Ta).

6. Procédé suivant l'une des revendications 1 à 4, caractérisé en ce que le matériau de recouvrement de la couche de brasure est de la céramique et en ce que l'on utilise un corps moulé (15), de préférence un cylindre, en la céramique.

7. Procédé suivant l'une des revendications précédentes, caractérisé en ce que la fusion de la couche de brasure (13, 130) s'effectue par chauffage inductif.

8. Procédé suivant la revendication 7, caractérisé en ce qu'on utilise la courbe de variation de la température en fonction du temps (T = f(t)) pour régler le déroulement du processus lors de la fusion de la couche de brasure (13, 130).

9. Procédé suivant l'une des revendications 1 à 6, caractérisé en ce que la fusion de la couche de brasure (13, 130) s'effectue par chauffage dans un four.

10. Procédé suivant l'une des revendications précédentes, caractérisé en ce que la fusion de la couche de brasure (13, 130) s'effectue sous gaz protecteur, de préférence sous gaz rare ou sous azote.
